# EUROPEAN PATENT APPLICATION

(11) **EP 4 844 650 A1**
(43) Date of publication of application: **25.11.2026**
(21) Application number: 26180355.5
(22) Date of filing: 21.05.2026
(51) Int. Cl.: G06Q 10/0631, G06Q 10/0633, G06Q 50/04

(54) **METHOD AND SYSTEM FOR GENERATING SHIFT HANDOVER REPORTS IN INDUSTRIAL PLANTS**

(30) Priority: 23.05.2025 IN 202541049984
(71) Applicant: ABB Schweiz AG, 5400 Baden (CH)
(72) Inventor: STEINER-ARVIDSSON, Matilda, 6312 Steinhausen (CH); HOLLENDER, Martin, 69221 Dossenheim (DE); CA, Varun, 560077 Bangalore (IN); A, Devashree, 560059 Bangalore (IN); TAMASCELLI, Nicola, 68259 Mannheim (DE)
(74) Representative: Zimmermann & Partner Patentanwälte mbB

(57) **Abstract**

The present disclosure relates to method and system (106) for generating shift handover reports in industrial plants. The method comprises receiving process data and plurality of operator action events associated with first shift in an industrial plant. Further, the method comprises identifying relevancy of each operator action event in shift handover report for second shift in industrial plant, based on one or more pre-defined event attributes. Furthermore, the method comprises filtering one or more operator action events from operator action events, based on relevancy. The method comprises correlating one or more operator action events with process data, based on metadata and context data associated with one or more operator action events and process data. Thereafter, the method comprises generating shift handover report for second shift, including one or more operator action events and associated process data, based on correlation.

## Description

### TECHNICAL FIELD

The present disclosure generally relates to industrial systems. More particularly, the present disclosure relates to a method and a system for generating shift handover reports in industrial plants.

### BACKGROUND

Industrial facilities are inherently expansive and involve complex multi-stage operations, such as a large-scale refinery. This vast and intricate physical environment demands the constant presence of operators in industrial plants. The operators oversee the complex machinery, processes, and systems that make up the plant, ensuring efficient, safe, and continuous operation. During a typical work shift, the responsibilities of these operators are extensive. They often involve documenting work indicating whether the tasks are completed, ongoing, or slated for future action, recording crucial data, etc. In the industrial plants, typically a shift handover report is created that summarizes the production activities, incidents, and key metrics during a specific work shift. The shift handover report is then communicated to operators in a subsequent shift. The shift handover report ensures continuity of operations and awareness of ongoing issues.

The information disclosed in this background of the disclosure section is only for enhancement of understanding of the general background of the invention and should not be taken as an acknowledgement or any form of suggestion that this information forms the prior art already known to a person skilled in the art.

### SUMMARY

In an embodiment, the present disclosure discloses a method of generating shift handover reports in industrial plants. The method comprises receiving process data and a plurality of operator action events associated with a first shift in an industrial plant, from a plurality of sources. The plurality of operator action events comprises at least one of, operator-triggered actions and information captured from one or more operators with a plurality of modalities. Further, the method comprises identifying a relevancy of each of the plurality of operator action events in a shift handover report for a second shift in the industrial plant, based on one or more pre-defined event attributes. Furthermore, the method comprises filtering one or more operator action events from the plurality of operator action events, based on the relevancy. The method comprises correlating the one or more operator action events with the process data, based on metadata and context data associated with the one or more operator action events and the process data. Thereafter, the method comprises generating the shift handover report for the second shift, including the one or more operator action events and associated process data, based on the correlation.

In an embodiment, the present disclosure discloses a method of generating shift handover reports in industrial plants. The method comprises receiving process data and a plurality of plant events associated with a first shift in an industrial plant, from a plurality of sources. The plurality of plant events are captured with a plurality of modalities. Further, the method comprises identifying a relevancy of each of the plurality of plant events in a shift handover report for a second shift in the industrial plant, based on one or more pre-defined event attributes. Furthermore, the method comprises filtering one or more plant events from the plurality of plant events, based on the relevancy. The method comprises correlating the one or more plant events with the process data, based on metadata and context data associated with the one or more plant events and the process data. Thereafter, the method comprises generating the shift handover report for the second shift, including the one or more plant events and associated process data, based on the correlation.

In an embodiment, the present disclosure discloses a method of generating shift handover reports in industrial plants. The method comprises receiving process data and a plurality of plant events associated with an industrial plant, from a plurality of sources. Further, the method comprises identifying one or more plant events from the plurality of plant events, based on one or more pre-defined event attributes. Furthermore, the method comprises correlating the one or more plant events with the process data, based on metadata and context data associated with the one or more plant events and the process data. Thereafter, the method comprises generating a shift handover report including the one or more plant events and associated process data, based on the correlation.

In an embodiment, the present disclosure discloses a system for generating shift handover reports in industrial plants. The system comprises a processor and a memory. The processor is configured to receive process data and a plurality of operator action events associated with a first shift in an industrial plant, from a plurality of sources. The plurality of operator action events comprises at least one of, operator-triggered actions and information captured from one or more operators with a plurality of modalities. Further, the processor is configured to identify a relevancy of each of the plurality of operator action events in a shift handover report for a second shift in the industrial plant, based on one or more pre-defined event attributes. Furthermore, the processor is configured to filter one or more operator action events from the plurality of operator action events, based on the relevancy. The processor is configured to correlate the one or more operator action events with the process data, based on metadata and context data associated with the one or more operator action events and the process data. Thereafter, the processor is configured to generate the shift handover report for the second shift, including the one or more operator action events and associated process data, based on the correlation.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING DRAWINGS

The disclosure will best be understood by reference to the following detailed description of an illustrative embodiment when read in conjunction with the accompanying figures. One or more embodiments are now described, by way of example only, with reference to the accompanying figures wherein like reference numerals represent like elements and in which:
**Figure 1** illustrates an exemplary environment for generating shift handover reports in industrial plants, in accordance with some embodiments of the present disclosure;
**Figure 2** illustrates a block diagram of a system for generating shift handover reports in industrial plants, in accordance with some embodiments of the present disclosure;
**Figure 3** **and** **Figures 4A****-4C** illustrate exemplary illustrations for generating shift handover reports in industrial plants, in accordance with some embodiments of the present disclosure;
**Figures 5-7** show exemplary flow charts illustrating method steps for generating shift handover reports in industrial plants, in accordance with some embodiments of the present disclosure; and
**Figure 8** shows a block diagram of a general-purpose computing system for generating shift handover reports in industrial plants, in accordance with embodiments of the present disclosure.

It should be appreciated by those skilled in the art that any block diagram herein represents conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternatives falling within the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or apparatus.

In the industrial plants, typically a shift handover report is created that summarizes the production activities, incidents, and key metrics during a specific work shift. This shift handover report is then communicated to operators in a subsequent shift. The shift handover report ensures continuity of operations and awareness of ongoing issues.

Although many low-level information sources about process operation like time-series data, alarms and events are available, there is a lack of high level context information in the shift handover report. The demanding nature of operators' primary tasks often leaves them with insufficient time to create comprehensive, high-level explanations of events and their causes. For example, consider a chemical batch with a very long cycle time. The reason was that the chemical batch was waiting for the flaring system which was working at its capacity limit. Although this is obvious at the time of production, it might be very difficult to infer this from low level history entries at a later point in time. Also, there is a risk that operators may forget to include key actions in the shift handover reports.

There is a lot of verbal communication between operators, for instance, in a control room of the industrial plant. For example, the verbal communication can include telephone calls from other stakeholders (including other control rooms), radio communication with field operators, discussions between operators, engineers, maintenance team and shift leaders. Operators often have very valuable context information. It is a major problem that such context information is not captured and is unavailable for later analysis. The communication needs to be captured, transcribed and structured, so that it becomes available in the shift handover report. Similarly, video streams recording crucial operator actions need to be captured and transcribed.

Many operator actions are worth to be discussed in a shift hand-over discussion. Although a low-level audit trail events of operator actions can be automatically recorded, these records cannot be directly used as a basis for shift handover. Firstly, a large number of operator action events exist as events are very low level. One logical operator task might result in many operator action events. In some cases, performing the task might create different events spread across several hours. Also, events for routine tasks are included. These are planned tasks which may not be worth mentioning in the shift handover reports. Further, there are challenges associated with recording every word of an operator as it may seem like constant supervision and raise privacy concerns. Secondly, spoken language is ambiguous, which makes the reports less valuable for later retrieval, if recordings are used directly used as a basis for shift handover.

The present disclosure provides a method and a system for generating shift handover reports in industrial plants. The present disclosure discloses capturing operator action events with various modalities such as voice conversations, video streams, etc. The system of the present disclosure identifies a relevancy of the captured operator action events in the shift handover report based on different attributes. Particularly, the system identifies and filters the operator action events that are worth to be discussed during shift handover. The system of the present disclosure correlates the operator action events with the process data, based on metadata and context data associated with the events and the process data. This ensures that the operator action events that are relevant to be mentioned in the shift handover reports are also tagged with real-time process data, thus enriching supporting information in the shift handover reports. This also ensures a proper context and reasoning to any deviations or abnormalities identified in process data of the industrial plant.

The system of the present disclosure identifies a relevancy of the captured operator action events in the shift handover report based on different attributes. This ensures that certain low-level events or routine events which are not worth to be discussed are filtered. Also, the computational capacity required to process large number of operator action events is reduced. The present disclosure takes privacy concerns into consideration by ensuring that only the operator action events relevant in the shift handover report are identified and filtered. Further, the present disclosure discloses updating the operator action events based on feedback received from respective operators in the industrial plant. This further address privacy concerns and ensures validation of filtered operator action events. Also, this allows operators to decide events that need to be part of the shift handover report. The present disclosure ensures that no important events are forgotten to be included in the shift handover report. Further, the system enforces a rigid terminology during transcription of the operator action events, avoiding any ambiguity.

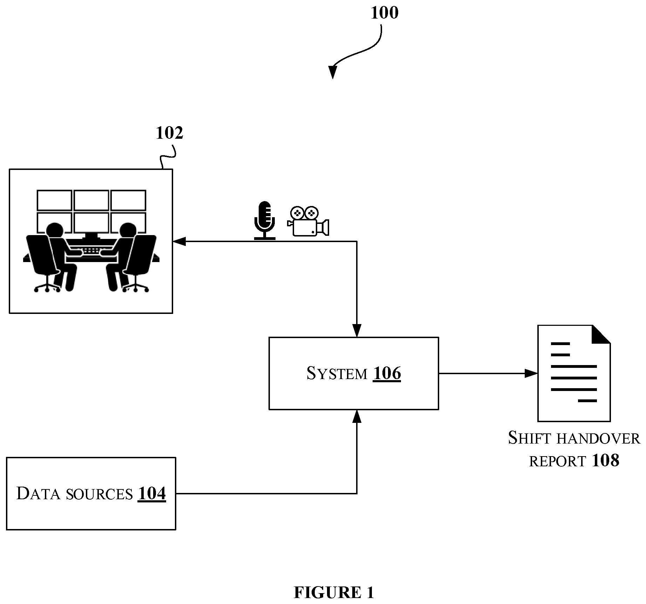

**Figure 1** illustrates an exemplary environment 100 for generating shift handover reports in industrial plants, in accordance with embodiments of the present disclosure. The environment 100 comprises a control system 102, data sources 104, and a system 106. In the present disclosure, the system 106 is configured to generate the shift handover report in industrial plants. In the industrial plants, a shift handover report is created that summarizes the production activities, incidents, and key metrics during a specific work shift. The shift handover report ensures continuity of operations and awareness of ongoing issues. The system 106 of the present disclosure performs a series of steps to enrich supporting information in the shift handover reports. The steps are explained in detail hereafter in the description.

In the present disclosure, the system 106 is configured to receive process data and a plurality of operator action events associated with a first shift in an industrial plant, from a plurality of sources. In the present description, the term "first shift" refers to a period of time during which a group of operators is on duty. The term "second shift" refers to a subsequent shift in the industrial plant. The plurality of operator action events comprises at least one of, operator-triggered actions and information captured from one or more operators with a plurality of modalities. In an example, the process data may include current values and voltage values associated with an equipment in the industrial plant. The plurality of operator action events may include an audio conversation between two operators. Figure 1 shows an example where the plurality of operator action events are received from a control room 102 associated with the industrial plant. In another example, the plurality of operator action events may include video stream of operator performing control of the equipment in the industrial plant. The plurality of operator action events and the process data may be received from the plurality of sources. For example, the plurality of sources to receive the operator action events may include a video capturing unit. Figure 1 illustrates the process data received from data sources 104. The data sources 104 may include, for example, a Distributed Control System (DCS).

Further, the system 106 is configured to identify a relevancy of each of the plurality of operator action events in a shift handover report for a second shift in the industrial plant, based on one or more pre-defined event attributes. The system 106 may be configured to filter one or more operator action events from the plurality of operator action events, based on the relevancy. In an example, the system 106 may filter routine events from the plurality of operator action events that may not be relevant in the shift handover report. Then, the system 106 may be configured to correlate the one or more operator action events with the process data, based on metadata and context data associated with the one or more operator action events and the process data. The system 106 may generate the shift handover report for the second shift, including the one or more operator action events and associated process data, based on the correlation. This ensures that the operator action events that are relevant to be mentioned in the shift handover reports are identified and also tagged with real-time process data, thus enriching supporting information in the shift handover reports.

In an embodiment, the system 106 may be implemented in a variety of computing systems, such as a laptop computer, a desktop computer, a Personal Computer (PC), a notebook, a smartphone, a tablet, e-book readers, a server, a network server, a cloud-based server, and the like. In an embodiment, the system 106 may be implemented in a computer in the industrial plant, an edge device, and/or a cloud server. In an embodiment, system 106 may be communicatively coupled with one or more control systems such as DCS, Supervisory Control and Data Acquisition (SCADA), and the like.

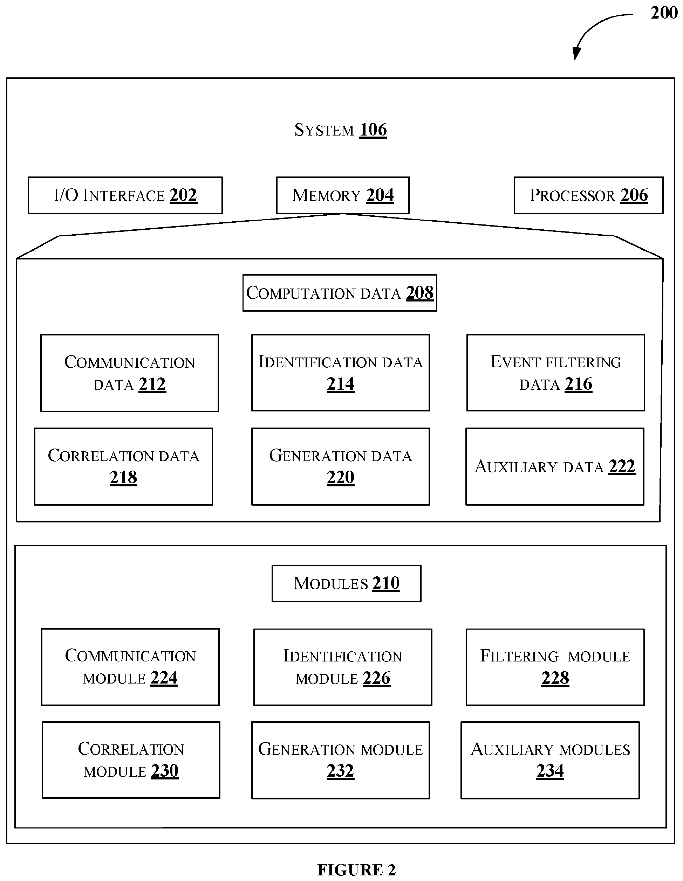

**Figure 2** illustrates a block diagram 200 of the system 106 for generating shift handover reports in industrial plants, in accordance with some embodiments of the present disclosure. The system 106 may include Central Processing Units 206 (also referred as "CPUs" or "a processor 206"), Input/ Output (I/O) interface 202, and a memory 204. In some embodiments, the memory 204 may be communicatively coupled to the processor 206. The memory 204 stores instructions executable by the processor 206. The processor 206 may comprise at least one data processor for executing program components for executing user or system-generated requests. The memory 204 may be communicatively coupled to the processor 206. The memory 204 stores instructions, executable by the processor 206, which, on execution, may cause the processor 206 to generate shift handover reports in industrial plants. In an embodiment, the memory 204 may include one or more modules 210 and computation data 208. The one or more modules 210 may be configured to perform the steps of the present disclosure using the computation data 208, to generate shift handover reports in industrial plants. In an embodiment, each of the one or more modules 210 may be a hardware unit which may be outside the memory 204 and coupled with the system 106. As used herein, the term modules 210 refers to an Application Specific Integrated Circuit (ASIC), an electronic circuit, a Field-Programmable Gate Arrays (FPGA), Programmable System-on-Chip (PSoC), a combinational logic circuit, and/or other suitable components that provide described functionality. The one or more modules 210 when configured with the described functionality defined in the present disclosure will result in a novel hardware. Further, the I/O interface 202 is coupled with the processor 206 through which an input signal or/and an output signal is communicated. For example, the system 106 may receive the process data from the DCS, using the I/O interface 202.

In one implementation, the modules 210 may include, for example, a communication module 224, an identification module 226, a filtering module 228, a correlation module 230, a generation module 232, and auxiliary modules 234. It will be appreciated that such aforementioned modules 210 may be represented as a single module or a combination of different modules. In one implementation, the computation data 208 may include, for example, communication data 212, identification data 214, event filtering data 216, correlation data 218, generation data 220, and auxiliary data 222.

In one implementation, the communication module 224 may comprise a transmitter and a receiver. The communication module 224 may include antennas, transceivers, network interface controllers (NICs), and the like to transmit and receive data. For instance, the transmitter of the communication module 224 may be configured to transmit the shift handover report to an operator or an application. The receiver of the communication module 224 may be configured to receive the process data and the plurality of operator action events from the plurality of sources. Further, the communication module 224 may comprise protocol handling units such as Transmission Control Protocol/Internet Protocol (TCP/IP), User Datagram Protocol (UDP) etc. The protocol handling units may be configured for encoding or decoding data, routing of data, etc. For instance, the system 106 may be implemented in a cloud server. In such a case, the protocol handling units may be used to manage the process data and the plurality of operator action events received from multiple plants. Further, the communication module 224 may comprise data buffers, for instance, to temporarily store the process data and the plurality of operator action events received from the industrial plants. Also, the communication module 224 may include interfaces such as serial ports, ethernet ports, etc. The communication module 224 may include a signal pre-processing unit to eliminate noise from the process data and the plurality of operator action events. The communication module 224 may transfer the process data and the plurality of operator action events to the memory 204 of the system 106.

In one implementation, the identification module 226 may be coupled to the memory 204 of the system 106. In an embodiment, the identification module 226 may be configured to retrieve the process data and the plurality of operator action events from the memory 204. In an embodiment, the identification module 226 may store the process data and the plurality of operator action events in the memory 204. In one implementation, the filtering module 228 may be configured to retrieve the process data and the plurality of operator action events from the memory 204. In an embodiment, the filtering module 228 may store a relevancy of each of the plurality of operator action events in the memory 204.

In one implementation, the correlation module 230 may be configured to retrieve the stored relevancy of each of the plurality of operator action events from the memory 204. In an embodiment, the correlation module 230 may store the results of correlation in the memory 204. In one implementation, the generation module 232 may be configured to retrieve the results of correlation from the memory 204. In an embodiment, the generation module 232 may be coupled with the communication module 224 to transmit the generated shift handover report, for example, to an operator device or an application. A person skilled in the art will appreciate that each of the above-stated modules may comprise fewer or additional components, and the above-mentioned components should not be considered as limiting.

The functionalities of the above-stated modules are explained in subsequent paragraphs of the detailed description.

In an embodiment, the communication module 224 may be configured to receive the process data and the plurality of operator action events associated with a first shift in the industrial plant. The process data may comprise real-time data related to a plurality of processes in the industrial plant and data from one or more control systems associated with the industrial plant. In an example, consider the industrial plant as a chemical plant. The process data may include real-time values of temperature, pressure, flow rates etc. in a distillation column of the chemical plant. The data from the one or more control systems may include, for example, information related to maintenance actions, quality deviations etc. In an example, the one or more control systems may include, DCS, SCADA, a laboratory information management system, a maintenance management system, and the like.

The plurality of operator action events may comprise at least one of operator-triggered actions and information captured from one or more operators with a plurality of modalities. The operator-triggered actions may include actions that are manually performed by one or more operators in the industrial plant. For instance, the operator-triggered actions may include setting a controller into manual mode, overriding an interlock, correction of quality issues, etc. The operator-triggered actions may be captured with the plurality of modalities. The plurality of modalities may include, for example, audio, video, text, haptic, tactile, etc. In an example, a video stream of an operator performing a specific action may be recorded and received. In another example, haptic information associated with key presses of an operator to control a specific process may be received. The information captured from the one or more operators with the plurality of modalities may include, for example, audio conversations between operators, engineers, shift leaders, video recordings from a control room of the industrial plant, etc. In an example, an operator may carry a microphone and/or a camera for capturing voice or video events that can be annotated in the shift handover reports.

**In** an embodiment, the communication module 224 may receive the process data and the plurality of operator action events from the plurality of sources. The plurality of sources for receiving the plurality of operator action events may include, for example, audio recording units, video recording units, etc. In an embodiment, the communication module 224 may receive transcribed audio/video recordings from a transcription module. The transcription module may transcribe the audio/video recordings from audio/video recording units. In an embodiment, the audio/video recording units may continuously capture the plurality of operator action events. In an embodiment, communication module 224 may receive the captured plurality of operator action events continuously from the audio/video recording units. In another embodiment, the communication module 224 may receive the captured plurality of operator action events towards end of the first shift.

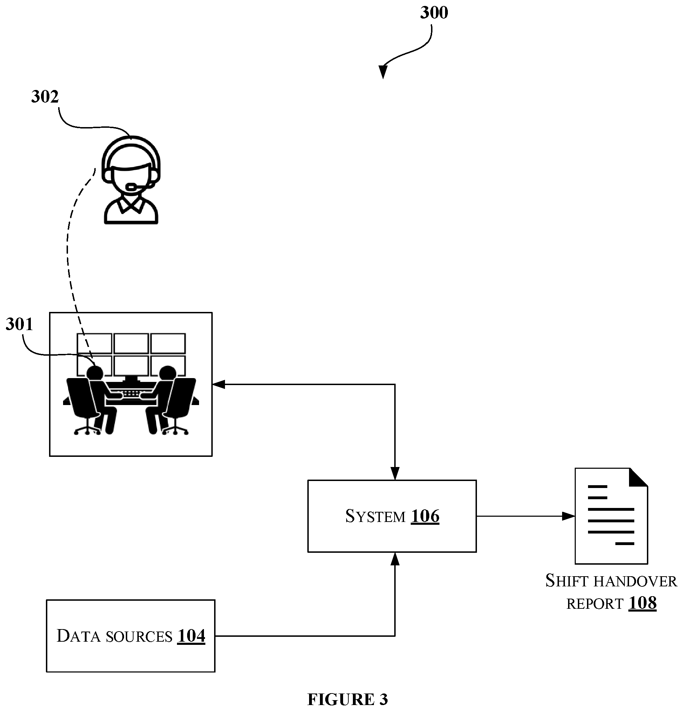

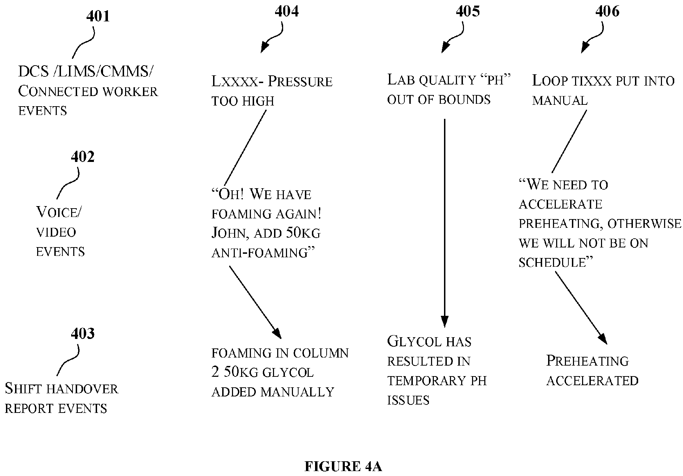

Referring to an example 300 in **Figure 3****,** an audio conversation between an operator 301 in a control room and an operator 302 is illustrated. The operator 2 may be located in another control room. The communication module 224 may receive the audio conversation between the operator 301 and the operator 302 captured by an audio recording unit. Referring to **Figure 4A****,** the process data may be received from the one or more control systems (for instance, DCS), as shown in 401. Further, the plurality of operator action events may be received, as shown in 402. The above-stated example of the chemical plant is further explained hereafter. As shown in example 404 in Figure 4A, the received process data may indicate "LXXXX- Pressure too high" indicating a high pressure in the distillation column of the chemical plant. One of the plurality of operator action events may indicate "Oh, we have foaming again! John, add 50kg anti-foaming".

Referring back to Figure 2, in an embodiment, the communication module 224 may receive the process data and a plurality of plant events associated with a first shift in the industrial plant, from the plurality of sources. The plurality of plant events may include, but not limited to, operator action events, alarms, change-of-state events, quality issues, maintenance events, and logistic events, various system-generated notifications. For example, a temperature of an equipment may increase too high. A temperature alarm may be raised in the industrial plant. There are chances that the operator misses the alarm. Hence, it is required to capture these critical plant events in the shift handover reports. The plurality of plant events may be captured with the plurality of modalities. For example, the plurality of plant events may be captured in video streams of the control room. The received process data and the plurality of plant events may be stored as the communication data 212 in the memory 204.

In an embodiment, the identification module 226 may be configured to identify a relevancy of each of the plurality of operator action events in a shift handover report for a second shift in the industrial plant. There may be a large number of operator action events in the industrial plant. Herein, the identification module 226 may identify a relevancy of each of the plurality of operator action events in the shift handover report. In an embodiment, the identification module 226 may identify the relevancy of each of the plurality of operator action events, based on one or more pre-defined event attributes.

The pre-defined event attributes may include, but are not limited to, a type of event, a criticality of the event, a frequency of the event, and a sequence of the events. For example, the events that require a signature or an approval, safety overrides, or indicate setpoint changes may be crucial to be mentioned in the shift handover report. The regular/frequent events may not be relevant and may be excluded, and rare events may be included. The unusual sequence of events may be relevant and may be included. In an embodiment, the identification module 226 may identify the one or more operator action events from the plurality of operator action events based on at least one of pre-defined rules and historical shift handover reports. In an example, the pre-defined rules may define certain routine events to be excluded, for instance, assets under maintenance. In another example, the pre-defined rules may indicate inclusion of actions which are deviating from the standard operating procedure step/sequence. In an embodiment, a success probability of operator action events that led to an entry in historical shift handover reports may be determined to identify the one or more operator action events. Referring again to Figure 3, the identification module 226 may identify the operator action event shown in 404 as relevant to be included in the shift handover report. Referring back to Figure 2, the relevancy of each of the plurality of operator action events may be stored as the identification data 214 in the memory 204.

In an embodiment, the filtering module 228 may be configured to filter the one or more operator action events from the plurality of operator action events, based on the relevancy. In an embodiment, the identification module 226 may assign a relevancy score to each of the plurality of operator action events, based on the one or more pre-defined attributes. The filtering module 228 may receive the relevancy score assigned to each of the plurality of operator action events from the identification module 226. The filtering module 228 may filter the one or more operator action events from the plurality of operator action events, based on corresponding relevancy scores.

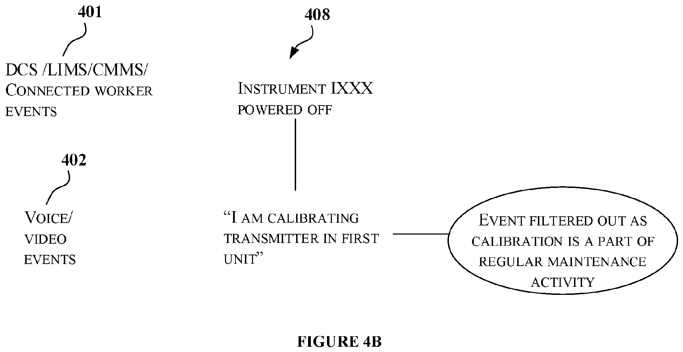

In an embodiment, the filtering module 228 may be further configured to transmit the filtered one or more operator action events to respective one or more operators in the industrial plant. Further, the filtering module 228 may update the filtered one or more operator action events, based on feedback received from the respective one or more operators. Herein, the one or more operators associated with respective one or more operator action events determine the one or more operator action events that need to be included in the shift handover reports. This ensures that the privacy of the one or more operators is taken into consideration. Also, this ensures validation of the filtered one or more operator action events. Referring again to Figure 3, the identification module 226 may identify the operator action event shown in 404 as relevant to be included in the shift handover report. Referring to an example 408 in **Figure 4B****,** the process data may indicate "Instrument IXXX powered off" at a timestamp 16:31:01. The operator action event may indicate "I am calibrating transmitter in first unit" at a timestamp 16:40:46. The operator action event may indicate a routine event of calibration of a pressure transmitter in a first unit in the industrial plant. The filtering module 228 may exclude the said event of calibration as it is a regular maintenance event. Referring back to Figure 2, the filtered one or more operator action events may be stored as the event filtering data 216 in the memory 204.

In an embodiment, the correlation module 230 may be configured to correlate the one or more operator action events with the process data, based on metadata and context data associated with the one or more operator action events and the process data. The metadata may include, but is not limited to, at least one of a timestamp and a device identity associated with the one or more operator action events and the process data. The context data may include, but is not limited to, at least one of domain knowledge of the industrial plant and historical data associated with the industrial plant. The correlation module 230 matches items from the plurality of operator action events with the list of items in the process data. Herein, the correlation module 230 identifies a plurality of timestamps in the process data, based on a relevancy of the process data at corresponding timestamps in the shift handover report. The relevancy of the process data in the shift handover report is identified based on the context data. For instance, the correlation module 230 identifies a timestamp as relevant in the shift handover report when the process data indicates an event deviating from standard operating procedure.

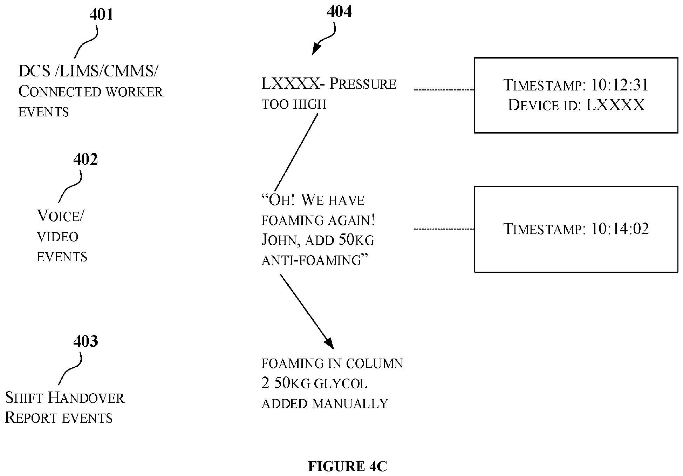

The correlation module 230 correlates the process data at the plurality of timestamps with the one or more operator action events, based on the metadata and the context data associated with the one or more operator action events and the process data. Herein, the correlation module 230 may determine proximity of timestamps or asset names to correlate the one or more operator action events and the process data. In an embodiment, the one or more operators may provide feedback to confirm or correct the correlations. Referring to the above-stated example of chemical plant and further to example 404 in **Figure 4C****,** the process data may indicate "LXXXX-Pressure too high". The metadata associated with the process data may indicate a timestamp 10:12:31 and a device identifier as LXXXX. An operator action event may indicate "Oh, we have foaming again! John, add 50kg anti-foaming". The metadata associated with the operator action event may indicate a timestamp 10:14:02.

The correlation module 230 may correlate the process data and the operator action event by determining the proximity of timestamps. Further, the correlation module 230 may identify that the operator is referring to a distillation column in the industrial plant based on the requirement of addition of anti-foaming agent, based on the context data. In an embodiment, the correlation module 230 may be trained via fine-tuning or Retrieval Augmented Generation (RAG) techniques. In an embodiment, the correlation module 230 may be associated with intelligent models such as, but not limited to, Large Language Models (LLMs), classification models, anomaly detection models, etc. This way, the correlation module 230 may understand that foaming likely affects columns or vessels. Furthermore, the correlation module 230 may have the ability to look into the process data and event data and look for trends / events (affecting columns or vessels) that may be pointing to possible foaming, effectively linking the audio with possible events that occurred during the shift. The correlation module 230 may have access to previous shift handover data and (i) look for similar events (in this case, foaming), (ii) check which devices were affected by the issue (in the past), and (ii) try to match past conditions with current conditions (e.g., process and event data of the current shift). The correlation module 230 may correlate the process data and the said operator action event. Referring to an example 405 in Figure 4A, the process data may indicate "Lab quality PH out of bounds". The correlation module 230 may correlate the prior process data "LXXXX-Pressure too high" and the said operator action event with the current process event "Lab quality PH out of bounds", based on the context data.

In another example 406 illustrated in Figure 4A, the process data may indicate "TIXXX put into manual". In existing systems, there may be no reasoning documented on controller changed to manual mode. An operator action event at proximal timestamp may indicate "We need to accelerate preheating, otherwise we will not be on schedule". The correlation module 230 may correlate the process data and the operator action event to determine the reasoning that the controller is put into manual, to accelerate the preheating. Referring back to Figure 2, the correlated process data and the one or more operation action events may be stored as the correlation data 218 in the memory 204.

In an embodiment, the generation module 232 may be configured to receive the correlation data 218 from the correlation module 230. Further, the generation module 232 may be configured to generate the shift handover report for the second shift based on the correlation. The generated shift handover report may include the one or more operator action events and associated process data. The generated shift handover report may be stored as the generation data 220 in the memory 204. In an embodiment, the generation module 232 may be coupled to the communication module 224 to transmit the generated shift handover report to the one or more operators, operators in a subsequent shift, or an application in the industrial plant. Referring to the example 404 in Figure 4A, the supporting information "foaming in column 2 50kg glycol added manually" may be added to the shift handover report. In another example 406 in Figure 4A, the supporting information "Preheating accelerated" may be added to the shift handover report.

The present disclosure ensures that the spoken operator action events are well captured and tagged to the process data, which can enrich supporting data in the shift handover report. For instance, consider the process data indicates a temperature rising of an equipment, but it might be difficult to understand why this temperature is rising. The time stamps of these logs are usually very precise ("2025-02-01T03:04:17"), and the assets are precisely identified by tag names ("FICA1704A"). If a digital twin of the plant exists, then it is known to which asset a tag name belongs. The verbal communications in the control room refer to the same events, however the precision of time may be less, and spoken language may be ambiguous ("this morning", "some Minutes ago") and assets are described with casual language ("burner 1", "main tower"). Operators often have very valuable context in-formation ("cooling didn't work, because the heat exchanger was clogged"). The present disclosure ensures that the spoken operator action events are well captured and tagged to the process data, using metadata such as proximity in timestamps.

Referring back to Figure 2, the auxiliary data 222 may store data, including temporary data and temporary files, generated by the one or more modules 210 for performing the various functions of the system 106. The one or more modules 210 may also include the auxiliary modules 234 to perform various miscellaneous functionalities of the system 106. The auxiliary data 222 may be stored in the memory 204. It will be appreciated that the one or more modules 210 may be represented as a single module or a combination of different modules.

The series of steps performed by various modules of the system 106 may be similar in a case of receiving the plurality of plant events. The same is not repeated again for the sake of brevity.

An example of enhancing the supporting information in the shift handover report is illustrated as below. The example shows various operator conversations.
The previous day at 4:00 PM:
   Email: Based on reservoir study and simulations done we can ramp up the well, Well#B 1 from 3000 BPD to 4000 BPD in two days starting tomorrow. Please collect samples and send them for analysis after each step. Once the activity is completed, please inform us, so that we can start further analysis of the well.
8:00 am:
   Shift Manger: Calls panel operator to start the ramp up of the well from 9:00 am, (Please start the well ramp up of B1 to 3500.
8:40 am:
   Panel Operator: Can you please line up well #B1 into MPFM?
8:40 am:
   Offshore operator: Okay copied
8:50 am:
   Offshore operator: B1 lined up in MPFM.
9:03 am:
   Panel operator: Calls offshore operator, can you be at well head area?
9:04 am:
   Offshore operator: Near well head area.
9:05 am:
   Panel operator: Can you tell me the choke opening at local?
   Offshore operator: It is 18%
   Panel operator: I am giving an open command, please confirm
   Offshore operator: Command received at choke.
   Panel operator: Okay, copied.
9:05:31 am:
   Event: WellB1 choke opened from 18 to 19%
9:35 am:
   Event: WellB1 choke opened from 19 to 20%
10:10 am:
   Event: WellB1 choke opened from 20 to 21%
10:40 am:
   Operator observes flow meter reading is 3512 BPD.
10:55 am:
   Panel operator: Can you collect sample from Well B1? Offshore operator: Okay copied
11:00 am:
   Panel operator (to onshore filed operator): Can you check the demulsifier dosing rate? Field operator: Copied
11:10 am:
   Filed operator: Dosing rate is 15 cc/min
11:10 am:
   Panel Operator: Increase the dosing to 18 cc/min
11:15 am:
   Filed operator: Dosing rate increased to 18 cc/min
11:30 am:
   Panel Operator (to onshore filed operator): Can you please check water side and oil side sample
11:40 am:
   Filed operator: Sample taken and water side is clear water and oil side is clear oil.
   The system 106 of the present disclosure analyses the operator communications and includes supporting information as below in the shift handover report:
      "Well # B1 is in MPFM and is ramped up from 3000 to 3512 BPD. Next ramp up to be planned for tomorrow. Sample is to be sent to lab.
      Demuslifier injection rate increased from 15 cc/min to 18 cc/min".

In another example, consider a level controller in a tank "T1" is not working correctly. The level "L101" inside "T1" rises and after 2 hours reaches critical limit. A level alarm "L101-H" is generated and sent to the operator at "15:03:12". The operator redirects inflow "F55" to tank "T2" and pumps some liquid from "T1" to "T2" with flow "F56". The level alarm "L101-H" returns to normal. The operator might forget to inform the next shift that the level controller in T1 is not working, and they therefore should use "T2" instead of "T1". Seeing the alarm "L101A-H" together with several manual action events is a clear reminder during shift handover to inform the next shift that "T1" has a problem. The present disclosure enables capturing such supporting information.

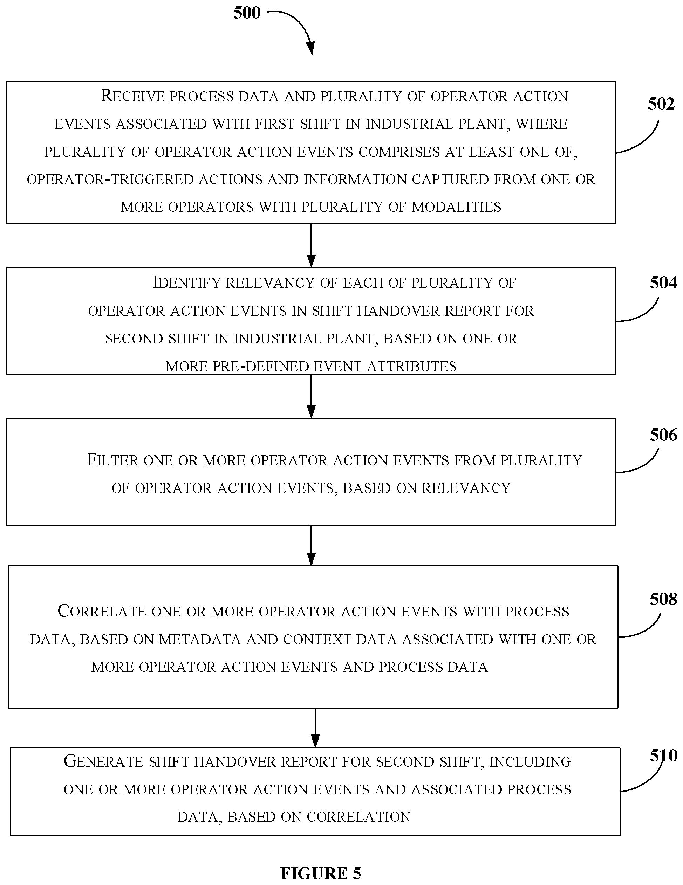

**Figure 5** shows an exemplary flow chart illustrating method steps for generating shift handover reports in industrial plants, in accordance with some embodiments of the present disclosure. As illustrated in Figure 5, the method 500 may comprise one or more steps. The method 800 may be described in the general context of computer executable instructions. Generally, computer executable instructions can include routines, programs, objects, components, data structures, procedures, modules, and functions, which perform particular functions or implement particular abstract data types.

The order in which the method 500 is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At step 502, the system 106 receives the process data and the plurality of operator action events associated with a first shift in the industrial plant. The process data may comprise real-time data related to a plurality of processes in the industrial plant and data from the one or more control systems associated with the industrial plant. The plurality of operator action events may comprise at least one of operator-triggered actions and information captured from one or more operators with a plurality of modalities. The operator-triggered actions may include actions that are manually performed by one or more operators in the industrial plant. In an embodiment, the system 106 may receive the process data and the plurality of operator action events from the plurality of sources.

At step 504, the system 106 may identify a relevancy of each of the plurality of operator action events in a shift handover report for a second shift in the industrial plant. In an embodiment, the system 106 may identify the relevancy of each of the plurality of operator action events, based on one or more pre-defined event attributes. The pre-defined event attributes may include, but are not limited to, a type of event, a criticality of the event, a frequency of the event, and a sequence of the events. In an embodiment, the system 106 may identify the one or more operator action events from the plurality of operator action events based on at least one of pre-defined rules and historical shift handover reports.

At step 506, the system 106 may filter the one or more operator action events from the plurality of operator action events, based on the relevancy. In an embodiment, the system 106 may assign a relevancy score to each of the plurality of operator action events, based on the one or more pre-defined attributes. The system 106 may filter the one or more operator action events from the plurality of operator action events, based on corresponding relevancy scores. In an embodiment, the system 106 may be further configured to transmit the filtered one or more operator action events to respective one or more operators in the industrial plant. Further, the system 106 may update the filtered one or more operator action events, based on feedback received from the respective one or more operators.

At step 508, the system 106 may correlate the one or more operator action events with the process data, based on metadata and context data associated with the one or more operator action events and the process data. The metadata may include, but is not limited to, at least one of a timestamp and a device identity associated with the one or more operator action events and the process data. The context data may include, but is not limited to, at least one of domain knowledge of the industrial plant and historical data associated with the industrial plant. The system 106 matches items from the plurality of operator action events with the list of items in the process data. Herein, the system 106 identifies a plurality of timestamps in the process data, based on a relevancy of the process data at corresponding timestamps in the shift handover report. The relevancy of the process data in the shift handover report is identified based on the context data. In an embodiment, the system 106 may be associated with intelligent models such as, but not limited to, Large Language Models (LLMs), classification models, anomaly detection models, etc.

At step 510, the system 106 may generate the shift handover report for the second shift based on the correlation. The generated shift handover report may include the one or more operator action events and associated process data.. In an embodiment, the system 106 may transmit the generated shift handover report to the one or more operators, operators in a subsequent shift, or an application in the industrial plant.

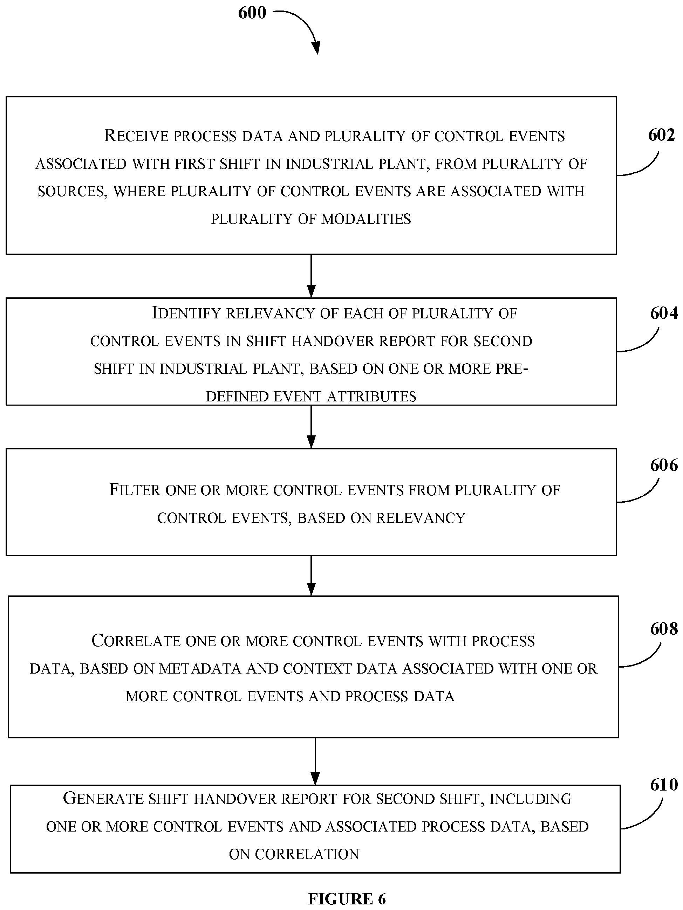

**Figure 6** shows an exemplary flow chart illustrating method steps for generating shift handover reports in industrial plants, in accordance with some embodiments of the present disclosure. As illustrated in Figure 6, the method 600 may comprise one or more steps. The method 600 may be described in the general context of computer executable instructions. Generally, computer executable instructions can include routines, programs, objects, components, data structures, procedures, modules, and functions, which perform particular functions or implement particular abstract data types.

The order in which the method 600 is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At step 602, the system 106 receives the process data and the plurality of plant events associated with a first shift in the industrial plant. The plurality of plant events may be captured with the plurality of modalities. The process data may comprise real-time data related to a plurality of processes in the industrial plant and data from the one or more control systems associated with the industrial plant. The plurality of plant events may include, but not limited to, operator action events, alarms, change-of-state events, quality issues, maintenance events, and logistic events, various system-generated notifications.

At step 604, the system 106 may identify a relevancy of each of the plurality of plant events in a shift handover report for a second shift in the industrial plant. In an embodiment, the system 106 may identify the relevancy of each of the plurality of plant events, based on one or more pre-defined event attributes. The pre-defined event attributes may include, but are not limited to, a type of event, a criticality of the event, a frequency of the event, and a sequence of the events. In an embodiment, the system 106 may identify the one or more plant events from the plurality of plant events based on at least one of pre-defined rules and historical shift handover reports.

At step 606, the system 106 may filter the one or more plant events from the plurality of plant events, based on the relevancy. In an embodiment, the system 106 may assign a relevancy score to each of the plurality of plant events, based on the one or more pre-defined attributes. The system 106 may filter the one or more plant events from the plurality of plant events, based on corresponding relevancy scores. In an embodiment, the system 106 may be further configured to transmit the filtered one or more plant events to respective one or more operators in the industrial plant. Further, the system 106 may update the filtered one or more plant events, based on feedback received from the respective one or more operators.

At step 608, the system 106 may correlate the one or more plant events with the process data, based on metadata and context data associated with the one or more plant events and the process data. The metadata may include, but is not limited to, at least one of a timestamp and a device identity associated with the one or more plant events and the process data. The context data may include, but is not limited to, at least one of domain knowledge of the industrial plant and historical data associated with the industrial plant. The system 106 matches items from the plurality of plant events with the list of items in the process data. Herein, the system 106 identifies a plurality of timestamps in the process data, based on a relevancy of the process data at corresponding timestamps in the shift handover report. The relevancy of the process data in the shift handover report is identified based on the context data. In an embodiment, the system 106 may be associated with intelligent models such as, but not limited to, Large Language Models (LLMs), classification models, anomaly detection models, etc.

At step 610, the system 106 may generate the shift handover report for the second shift based on the correlation. The generated shift handover report may include the one or more plant events and associated process data.. In an embodiment, the system 106 may transmit the generated shift handover report to the one or more operators, operators in a subsequent shift, or an application in the industrial plant.

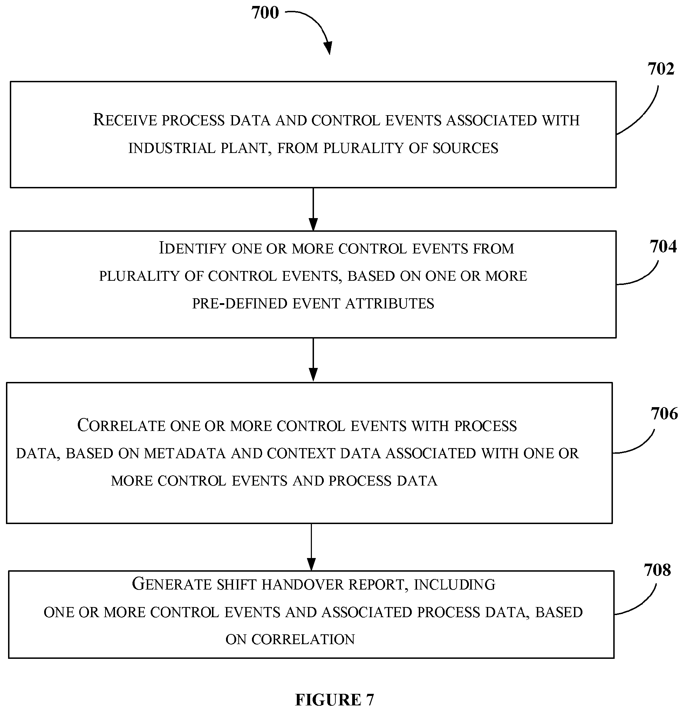

**Figure 7** shows an exemplary flow chart illustrating method steps for generating shift handover reports in industrial plants, in accordance with some embodiments of the present disclosure. As illustrated in Figure 7, the method 700 may comprise one or more steps. The method 700 may be described in the general context of computer executable instructions. Generally, computer executable instructions can include routines, programs, objects, components, data structures, procedures, modules, and functions, which perform particular functions or implement particular abstract data types.

The order in which the method 700 is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At step 702, the system 106 receives the process data and the plurality of plant events associated the industrial plant. The plurality of plant events may be received from the plurality of sources. The process data may comprise real-time data related to a plurality of processes in the industrial plant and data from the one or more control systems associated with the industrial plant. The plurality of plant events may include, but not limited to, operator action events, alarms, change-of-state events, quality issues, maintenance events, and logistic events, various system-generated notifications.

At step 704, the system 106 may identify the one or more plant events from the plurality of plant events, based on one or more pre-defined event attributes. The pre-defined event attributes may include, but are not limited to, a type of event, a criticality of the event, a frequency of the event, and a sequence of the events. In an embodiment, the system 106 may identify the one or more plant events from the plurality of plant events based on at least one of pre-defined rules and historical shift handover reports.

At step 706, the system 106 may correlate the one or more plant events with the process data, based on metadata and context data associated with the one or more plant events and the process data. The metadata may include, but is not limited to, at least one of a timestamp and a device identity associated with the one or more plant events and the process data. The context data may include, but is not limited to, at least one of domain knowledge of the industrial plant and historical data associated with the industrial plant. The system 106 matches items from the plurality of plant events with the list of items in the process data. Herein, the system 106 identifies a plurality of timestamps in the process data, based on a relevancy of the process data at corresponding timestamps in the shift handover report. The relevancy of the process data in the shift handover report is identified based on the context data. In an embodiment, the system 106 may be associated with intelligent models such as, but not limited to, Large Language Models (LLMs), classification models, anomaly detection models, etc.

At step 708, the system 106 may generate the shift handover report for the second shift based on the correlation. The generated shift handover report may include the one or more plant events and associated process data.. In an embodiment, the system 106 may transmit the generated shift handover report to the one or more operators, operators in a subsequent shift, or an application in the industrial plant.

### COMPUTER SYSTEM

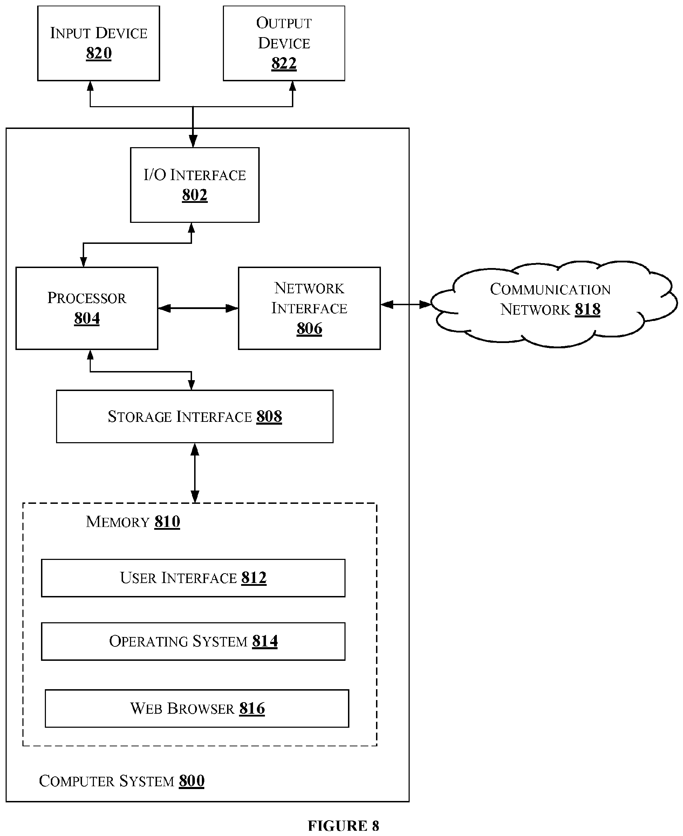

**Figure 8** illustrates a block diagram of an exemplary computer system 800 for implementing embodiments consistent with the present disclosure. In an embodiment, the computer system 800 may be the system 106. Thus, the computer system 800 may be used to generate shift handover reports in industrial plants.

The computer system 800 may communicate with one or more Input/Output (I/O) devices, using an I/O interface 802. For example, an input device 820 may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. An output device 822 may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

The computer system 800 may comprise a Central Processing Unit 804 (also referred as "CPU" or "processor"). The processor 804 may comprise at least one data processor. The processor 804 may include specialized processing units such as integrated system (bus) controllers, memory management control units, floating point units, graphics processing units, digital signal processing units, etc.

The processor 804 may be disposed in communication with one or more input/output (I/O) devices (not shown) via the I/O interface 802. The I/O interface 802 may employ communication protocols/methods such as, without limitation, audio, analog, digital, monoaural, RCA, stereo, IEEE (Institute of Electrical and Electronics Engineers) -1384, serial bus, universal serial bus (USB), infrared, PS/2, BNC, coaxial, component, composite, digital visual interface (DVI), high-definition multimedia interface (HDMI), Radio Frequency (RF) antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

The processor 804 may be disposed in communication with the communication network 818 via a network interface 806. The network interface 806 may communicate with the communication network 818. The network interface 806 may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 818 may include, without limitation, a direct interconnection, local area network (LAN), wide area network (WAN), wireless network (e.g., using Wireless Application Protocol), the Internet, etc. The network interface 806 may employ connection protocols include, but not limited to, direct connect, Ethernet (e.g., twisted pair 10/100/1000 Base T), transmission control protocol/internet protocol (TCP/IP), token ring, IEEE 802.11a/b/g/n/x, etc.

The communication network 818 includes, but is not limited to, a direct interconnection, an e-commerce network, a peer to peer (P2P) network, local area network (LAN), wide area network (WAN), wireless network (e.g., using Wireless Application Protocol), the Internet, Wi-Fi, and such. The first network and the second network may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the first network and the second network may include a variety of network devices, including routers, bridges, servers, computing devices, storage devices, etc.

In some embodiments, the processor 804 may be disposed in communication with a memory 810 (e.g., RAM, ROM, etc. not shown in Figure 8) via a storage interface 808. The storage interface 808 may connect to a memory 810 including, without limitation, memory drives, removable disc drives, etc., employing connection protocols such as serial advanced technology attachment (SATA), Integrated Drive Electronics (IDE), IEEE-1384, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory 810 may store a collection of program or database components, including, without limitation, user interface 812, an operating system 814, a web browser 816 etc. In some embodiments, the computer system 800 may store user/application data, such as, the data, variables, records, etc., as described in this disclosure. Such databases may be implemented as fault-tolerant, relational, scalable, secure databases such as Oracle^{®} or Sybase^{®}.

The operating system 814 may facilitate resource management and operation of the computer system 800. Examples of operating systems include, without limitation, APPLE MACINTOSH^{®} OS X, UNIX^{®}, UNIX-like system distributions (E.G., BERKELEY SOFTWARE DISTRIBUTION^{™} (BSD), FREEBSD^{™}, NETBSD^{™}, OPENBSD^{™}, etc.), LINUX DISTRIBUTIONS^{™} (E.G., RED HAT^{™}, UBUNTU^{™}, KUBUNTU^{™}, etc.), IBM^{™} OS/2, MICROSOFT^{™} WINDOWS^{™} (XP^{™}, VISTA^{™}/7/8, 10 etc.), APPLE^{®} IOS^{™}, GOOGLE^{®} ANDROID^{™}, BLACKBERRY^{®} OS, or the like.

In some embodiments, the computer system 800 may implement the web browser 816 stored program component. The web browser 816 may be a hypertext viewing application, for example MICROSOFT^{®} INTERNET EXPLORER^{™}, GOOGLE^{®} CHROME^{™}, MOZILLA^{®} FIREFOX^{™}, APPLE^{®} SAFARI^{™}, etc. Secure web browsing may be provided using Secure Hypertext Transport Protocol (HTTPS), Secure Sockets Layer (SSL), Transport Layer Security (TLS), etc. Web browsers 816 may utilize facilities such as AJAX^{™}, DHTML^{™}, ADOBE^{®} FLASH^{™}, JAVASCRIPT^{™}, JAVA^{™}, Application Programming Interfaces (APIs), etc. In some embodiments, the computer system 800 may implement a mail server (not shown in Figure) stored program component. The mail server may be an Internet mail server such as Microsoft Exchange, or the like. The mail server may utilize facilities such as ASP^{™}, ACTIVEX^{™}, ANSI^{™} C++/C#, MICROSOFT^{®}, .NET^{™}, CGI SCRIPTS^{™}, JAVA^{™}, JAVASCRIPT^{™}, PERL^{™}, PHP^{™}, PYTHON^{™}, WEBOBJECTS^{™}, etc. The mail server may utilize communication protocols such as Internet Message Access Protocol (IMAP), Messaging Application Programming Interface (MAPI), MICROSOFT^{®} exchange, Post Office Protocol (POP), Simple Mail Transfer Protocol (SMTP), or the like. In some embodiments, the computer system 800 may implement a mail client stored program component. The mail client (not shown in Figure) may be a mail viewing application, such as APPLE^{®} MAIL^{™}, MICROSOFT^{®} ENTOURAGE^{™}, MICROSOFT^{®} OUTLOOK^{™}, MOZILLA^{®} THUNDERBIRD^{™}, etc.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include Random Access Memory (RAM), Read-Only Memory (ROM), volatile memory, non-volatile memory, hard drives, Compact Disc Read-Only Memory (CD ROMs), Digital Video Disc (DVDs), flash drives, disks, and any other known physical storage media.

The present disclosure provides a method and a system for generating shift handover reports in industrial plants. The present dislcosure discloses capturing operator action events with various modalities such as voice conversations, video streams, etc. The system of the present disclosure identifies a relevancy of the captured operator action events in the shift handover report based on different attributes. The system of the present disclosure correlates the operator action events with the process data, based on metadata and context data associated with the events and the process data. This ensures that the operator action events that are relevant to be mentioned in the shift handover reports are also tagged with real-time process data, thus enriching supporting information in the shift handover reports. This also ensures a proper context and reasoning to any deviations or abnormalities identified in process data of the industrial plant.

The system of the present disclosure identifies a relevancy of the captured operator action events in the shift handover report based on different attributes. This ensures that certain low-level events or routine events which are not worth to be discussed are filtered. Also, the computational capacity required to process large number of operator action events is reduced. The present disclosure takes privacy concerns into consideration by ensuring that only the operator action events relevant in the shift handover report are identified and filtered. Further, the present disclosure discloses updating the operator action events based on feedback received from respective operators in the industrial plant. This further address privacy concerns and ensures validation of filtered operator action events. Also, this allows operators to decide events that need to be part of the shift handover report. The present disclosure ensures that no important events are forgotten to be included in the shift handover report. Further, the system enforces a rigid terminology during transcription of the operator action events, avoiding any ambiguity.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise. The terms "a", "an" and "the" mean "one or more", unless expressly specified otherwise.

A description of an embodiment with several components in communication with each other does not imply that all such components are required. On the contrary, a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article, or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of Figure 8 show certain events occurring in a certain order. In alternative embodiments, certain operations may be performed in a different order, modified, or removed. Moreover, steps may be added to the above-described logic and still conform to the described embodiments. Further, operations described herein may occur sequentially or certain operations may be processed in parallel. Yet further, operations may be performed by a single processing unit or by distributed processing units.

Finally, the language used in the specification has been principally selected for readability and instructional purposes, and it may not have been selected to delineate or circumscribe the inventive subject matter.

While various aspects and embodiments have been disclosed herein, other aspects and embodiments will be apparent to those skilled in the art. The various aspects and embodiments disclosed herein are for purposes of illustration and are not intended to be limiting.

### Referral Numerals:

| **Referral Number** | **Description** |
|---|---|
| 100 | Environment |
| 102 | Control center |
| 104 | Data sources |
| 106 | System |
| 108 | Shift handover report |
| 200 | Block diagram |
| 202 | I/O interface |
| 204 | Memory |
| 206 | Processor |
| 208 | Computation data |
| 210 | Modules |
| 212 | Communication data |
| 214 | Identification data |
| 216 | Event filtering data |
| 218 | Correlation data |
| 220 | Generation data |
| 222 | Auxiliary data |
| 224 | Communication module |
| 226 | Identification module |
| 228 | Filtering module |
| 230 | Correlation module |
| 232 | Generation module |
| 234 | Auxiliary modules |
| 800 | Computer system |
| 802 | I/O Interface |
| 804 | Processor |
| 806 | Network interface |
| 808 | Storage interface |
| 810 | Memory |
| 812 | User interface |
| 814 | Operating system |
| 816 | Web browser |
| 818 | Communication network |
| 820 | Input device |
| 822 | Output device |

## Claims

1. A method of generating shift handover reports in industrial plants, the method comprising:
receiving, by a processor (206), process data and a plurality of operator action events associated with a first shift in an industrial plant, from a plurality of sources, wherein the plurality of operator action events comprises at least one of, operator-triggered actions and information captured from one or more operators with a plurality of modalities;
identifying, by the processor (206), a relevancy of each of the plurality of operator action events in a shift handover report for a second shift in the industrial plant, based on one or more pre-defined event attributes;
filtering, by the processor (206), one or more operator action events from the plurality of operator action events, based on the relevancy;
correlating, by the processor (206), the one or more operator action events with the process data, based on metadata and context data associated with the one or more operator action events and the process data; and
generating, by the processor (206), the shift handover report for the second shift, including the one or more operator action events and associated process data, based on the correlation.

2. The method of claim 1, wherein the process data comprises real-time data related to a plurality of processes in the industrial plant and data from one or more control systems associated with the industrial plant.

3. The method of any of the preceding claims, wherein the correlating comprising:
identifying a plurality of timestamps in the process data, based on a relevancy of the process data at corresponding timestamps in the shift handover report; and
correlating the process data at the plurality of timestamps with the one or more operator action events, based on the metadata and the context data associated with the one or more operator action events and the process data.

4. The method of claim 3, wherein the relevancy of the process data in the shift handover report is identified based on the context data.

5. The method of any of the preceding claims, wherein the metadata comprises at least one of, a timestamp and a device identity associated with the one or more operator action events and the process data.

6. The method of any of the preceding claims, wherein the context data comprises at least one of, domain knowledge of the industrial plant and historical data associated with the industrial plant.

7. The method of any of the preceding claims, wherein filtering the one or more operator action events from the plurality of operator action events further comprising:
transmitting the filtered one or more operator action events to respective one or more operators in the industrial plant; and
updating the filtered one or more operator action events, based on feedback received from the respective one or more operators.

8. The method of any of the preceding claims, wherein identifying the one or more operator action events from the plurality of operator action events is further based on at least one of, pre-defined rules and historical shift handover reports.

9. A system (106) for generating shift handover reports in industrial plants, the system (106) comprises:
a processor (206); and
a memory (204), wherein the memory (204) stores processor-executable instructions, which, on execution, causes the processor (206) to:
receive process data and a plurality of operator action events associated with a first shift in an industrial plant, from a plurality of sources, wherein the plurality of operator action events comprises at least one of, operator-triggered actions and information captured from one or more operators with a plurality of modalities;
identify a relevancy of each of the plurality of operator action events in a shift handover report for a second shift in the industrial plant, based on one or more pre-defined event attributes;
filter one or more operator action events from the plurality of operator action events, based on the relevancy;
correlate the one or more operator action events with the process data, based on metadata and context data associated with the one or more operator action events and the process data; and
generate the shift handover report for the second shift, including the one or more operator action events and associated process data, based on the correlation.

10. The system (106) of claim 9, wherein the processor (206) is configured to correlate the one or more operator action events with the process data by:
identifying a plurality of timestamps in the process data, based on a relevancy of the process data at corresponding timestamps in the shift handover report; and
correlating the process data at the plurality of timestamps with the one or more operator action events, based on the metadata and the context data associated with the one or more operator action events and the process data.

11. The system (106) of claim 10, wherein the processor (206) is configured to identify the relevancy of the process data in the shift handover report based on the context data.

12. The system (106) of any of the claims 9 to 11, wherein the metadata comprises at least one of, a timestamp and a device identity associated with the one or more operator action events and the process data, and wherein the context data comprises at least one of, domain knowledge of the industrial plant and historical data associated with the industrial plant.

13. The system (106) of any of the claims 9 to 12, wherein the processor (206) identifies the one or more operator action events from the plurality of operator action events based on at least one of, pre-defined rules and historical shift handover reports.

14. A method of generating shift handover reports in industrial plants, the method comprising:
receiving, by a processor (206), process data and a plurality of plant events associated with a first shift in an industrial plant, from a plurality of sources, wherein the plurality of plant events are captured with a plurality of modalities;
identifying, by the processor (206), a relevancy of each of the plurality of plant events in a shift handover report for a second shift in the industrial plant, based on one or more pre-defined event attributes;
filtering, by the processor (206), one or more plant events from the plurality of voice-based operator action events, based on the relevancy;
correlating, by the processor (206), the one or more plant events with the process data, based on metadata and context data associated with the one or more plant events and the process data; and
generating, by the processor (206), the shift handover report for the second shift, including the one or more plant events and associated process data, based on the correlation.

15. A method of generating shift handover reports in industrial plants, the method comprising:
receiving, by a processor (206), process data and a plurality of plant events associated with an industrial plant, from a plurality of sources;
identifying, by the processor (206), one or more plant events from the plurality of plant events, based on one or more pre-defined event attributes;
correlating, by the processor (206), the one or more plant events with the process data, based on metadata and context data associated with the one or more plant events and the process data; and
generating, by the processor (206), a shift handover report including the one or more plant events and associated process data, based on the correlation.
